# EUROPEAN PATENT SPECIFICATION

(11) **EP 2 096 124 B1**
(45) Date of publication and mention of the grant of the patent: **14.12.2011**
(21) Application number: 09153932.0
(22) Date of filing: 27.02.2009
(51) Int. Cl.: C08B 30/18, C09D 103/20, D21C 1/00, D21H 17/28, D21H 17/22, D21H 23/04, C08B 30/04

(54) **Method for incorporating flour in paper**
Verfahren für das Einarbeiten von Mehl in Papier
Procédé pour l'incorporation de la farine dans du papier

(30) Priority: 29.02.2008 NL 2001338
(43) Date of publication of application: 02.09.2009
(73) Proprietor: Smurfit Kappa Roermond Papier B.V., 6041 TA Roermond (NL)
(72) Inventor: van Kessel, Loud Louis Peter Marie, 5995 BL Kessel (NL); Nabuurs, Mark Lambertus Johannes, 6031 HX Nederweert (NL); Jetten, Franciscus Severinus Johannes Jozeph, 6095 NS Baexem (NL)
(74) Representative: Hatzmann, Martin

(56) References cited:
- EP-A- 0 338 787
- EP-A- 1 604 998
- WO-A-97/10385
- WO-A-2008/069655
- NL-A- 8 602 850
- US-A- 5 683 911
- E. WILHELM, H.W. THEMEIER EN M.G. LINDHAUER: STARCH/STÄRKE, vol. 50, no. 1, 1998, pages 7-13, XP002500290 D-69451 Weinheim
- HARKONEN H ET AL: "The effects of a xylanase and alpha beta-glucanase from Trichoderma reesei on the non-starch polysaccharides of whole meal rye slurry" JOURNAL OF CEREAL SCIENCE, ACADEMIC PRESS LTD, XX, vol. 21, no. 2, 1 January 1995 (1995-01-01), pages 173-183, XP004551976 ISSN: 0733-5210

## Description

The invention relates to a method for incorporating flour in paper. In particular, the invention is directed to making flour suitable to be used in paper and cardboard. Incidentally, in this specification and the appended claims, the term "paper" is understood to include cardboard as well.

More specifically, the invention relates to a method for making flour soluble or dispersible in water, comprising degrading starch and modifying protein. The invention further relates to introducing such a flour solution or dispersion into paper or cardboard, by pressing the flour solution or flour dispersion into a paper fiber matrix with a press, or by mixing the flour solution or flour dispersion into the paper pulp and then preparing paper therefrom in a conventional manner.

Traditionally, starches are used on a large scale and in large volumes in the paper and cardboard industry. In the production of coated paper, which is mainly used as graphic paper in the fine paper industry, it is used *inter alia* as a binding agent in the coating.

In addition, starch is used as an additive to improve the strength properties, and particularly the dry-strength and stiffness properties, of paper. To this end, starches and anionic and cationic derivatives of these starches conventionally used in the paper industry are used, for which, for instance, reference can be made to patent applications EP-A-0 545 228 and WO-A-94/05855.

In this context, further reference can be made to Kirk-Othmer, Encyclopedia of Chemical Technology, Third Edition (1981), John Wiley & Sons, Volume 16, p. 803 and further, in particular pp. 814-819.

E. Wilhelm, H.W. Themeier en M.G. Lindhauer, Starch, Stärke 50(1), p. 7-13 (1998) describes the separation and refinement of small granule starches from amaranth and quinoa seed as well as a neutral extraction process with xylanases and other enzymes.

US 5,683,911 is directed to xylanases purified from the microorganism *Microtetraspora flexuosa* and to the use thereof for enhancing the delignification and bleaching of pulp. Treating the pulp with the enzymes prior to bleaching is used to reduce the amount of chlorine containing an/or peroxide chemicals required in the bleaching process.

NL 8602850 relates to a method for producing starch from grain, wherein dry milled grains are subjected to an enzyme treatment prior to starch extraction. The method results in more dissolved substance and improved separation of different fractions.

In H. Härkönen e.a., Journal of Cereal Science, 21 (1995), 173-183, the effects of extraction conditions on the extractability of rye meal non-starch polysaccharides are studied. The yield of pentosans and extractable matter increase with increases in both temperature and pH during extraction.

WO 2008/069655 relates to a flour-based product and describes a process for manufacturing paper or cardboard, wherein flour comprising a protein and starch fraction is subjected to a degradation step involving a treatment with protease and a non-starch polysaccharide (NSP) hydrolyzing enzyme, after which the flour is introduced into the paper fibre matrix.

EP 0338787 teaches enzyme treated low moisture content comestible products, which are produced by enzymatically treating a farinaceous material with an enzyme composition comprising pentosanase or beta-glucanase, or mixtures thereof to reduce its network forming swellable water-soluble hemicellulose content.

In the most common uses of starch as a fiber-reinforcing component, it is either introduced - usually in the form of cationic starch - into the mass of the paper in the wet part of the paper process or - substantially in the form of native starch made soluble - impregnated in the paper fiber mass by means of a so-called size press or a speed sizer.

These known strength-enhancing and stiffness-enhancing additives have advantages, both economically and technically or technologically; they give the paper or the cardboard an added value. In addition to providing an added value in conventional paper and cardboard processes, particularly the increasing use of weaker fibers, increasingly reused wastepaper, and the decreasing availability of strong, long-fiber components in the basic pulp for paper make the need for additives for increasing the strength and stiffness great.

Incidentally, it is now already emphasized that the invention is not limited to recycle-fiber-based paper. The invention covers the whole field of paper and cardboard manufacture, including virgin-fiber-based paper.

The known additives based on starch can interact with the cellulose groups of paper fibers on a large scale. Thus, an increase of the number of mutual bonds between the paper fibers is realized, which reinforces the fiber-fiber bond and accordingly improves the strength and stiffness properties of the final product.

In conventional processes in which starches are used as a reinforcing agent, stringent requirements are imposed on the protein content which is allowed to be present in the starch product used. In particular, native starch used in paper manufacture, mainly native wheat, corn or potato starch, is supplied with an extra specification for maximum protein contents of 0.3-0.5 wt.%, based on the dry matter. Higher protein concentrations are considered to act as contamination and to cause clotting and deposits in the system. For instance, dispersion of gluten (the protein fraction in wheat flour) results in clotting and foaming. These drawbacks occur to a greater extent when these proteins are exposed to higher temperatures in the paper manufacture process.

The starch that forms the basic component for the currently used starch additives in paper is extracted from a large number of vegetable sources, for instance from grains, such as wheat, corn and rice; from tubers, such as potatoes and tapioca; or from other plant parts, such as sago.

From the above-mentioned vegetable sources, the starch is released using a combination of mechanical steps, moistening steps, purification steps and drying steps. The separated protein-containing fractions, as well as other by-product fractions, are used for secondary applications, for instance in the foodstuff and feed industries. During the starch purification, many waste flows are released, such as biological material-containing flows. These flows are increasingly an environmental problem, so that simple discharge is no longer possible.

The preparation of the starch that is used as a fiber-reinforcing and paper-stiffening agent in the largest quantities in the paper industry, namely wheat starch, is described herein as an example to convey an impression of the process. Similar processes are carried out to make starch from other vegetable sources usable for the paper industry.

Wheat grains substantially consist of two components. The core, the so-called endosperm, consists for the most part of starch and protein. The outer layer, the bran or the chaff, mainly contains cellulose. The core:outer layer ratio is about 80:20.

These wheat grains are milled, whereby the chaff is separated from the core. The separated endosperm, which consists of starch for about 70-80% and of protein for about 10-15%, is typically referred to by the term "flour". Depending on the degree of milling of the wheat, purer or less pure flour is obtained. Thus, with a degree of milling of about 80%, "brown flour" is obtained, whereas, with a somewhat lower degree of milling of approx. 70%, considerably purer flour is obtained, because, with this degree of milling, no parts other than the endosperm end up in the flour.

In the production of starch for the paper industry, then *inter alia* the protein, particularly the gluten, is washed out of the flour. The flour is thus separated into various main components. As already indicated, in this process, uneconomic moistening and drying steps are carried out, a part of the wheat starting material cannot be used and by-products are created.

In WO-A-97/10385, a method is described for manufacturing paper or cardboard, where at least flour, which flour is composed of a protein-containing fraction and a starch-containing fraction coming from one and the same vegetable source, is subjected to a degradation step with ammonium persulfate (APS) and/or amylase, optionally in the presence of an acid, to make the starch and the protein soluble, after which the treated flour fractions are jointly introduced into the paper fiber matrix in one step. The latter is usually done either with a size press or with a speed sizer.

WO-A-97/10385 further relates to a method for manufacturing paper, where vegetable material with protein and starch (preferably grain) as its main components is incorporated completely, which method comprises separating the vegetable material into (a) a fraction which substantially consists of cellulose material, and (b) a fraction which substantially consists of protein and starch, where fraction (a) is supplied to the conventional starting paper fiber mass, and fraction (b) is treated according to the method described in the previous paragraph and is supplied in a step in which fiber-reinforcing additives are introduced into the paper.

In addition, in the methods according to WO-97/10385, use can be made of a protein-modifying step, such as treatment with a protease or with acid.

The present inventors have carried out extensive research and development to implement the method of WO-97/10385 in their production process for paper on an industrial scale and in a responsible manner from the point of view of business economics. During this implementation process, a number of problems occurred, which problems are described hereinbelow, and which problems are solved according to the present invention.

Thus, in the first place, the invention is directed to the prolonged, continuous use of flour in paper (and cardboard), where the components of the flour contribute to the paper properties on such a basis that substantially the same paper properties are obtained as when an equally large amount of conventional starch would be used; in particular, a paper or cardboard is obtained with similar stiffness and strength properties. In this description and in the appended claims, "flour" is understood to mean: a protein and starch-containing fraction coming from one and the same vegetable source, or a natural mixture of protein and starch. Most preferably, the flour consists of milled grains, without components being separated from these grains. Optionally, the flour can be used in combination with conventionally used starch. An important advantage of the method according to the invention is that the flour does not need to be separated first into its components, which can then be processed further.

When flour is degraded by degrading the starch and protein present therein such that a soluble or dispersible product is obtained which can be used in accordance with WO-A-97/10385, viscosity problems are found to occur when the flour is continuously introduced into the paper fiber matrix. At the locations where the flour solution or dispersion needs to be introduced into the paper by means of size-pressing or speed-sizing or other rolling procedures, the viscosity of this solution or dispersion increases in time such that disturbances and other process problems occur.

The inventors have found that the viscosity problems in the continuous processing of flour solutions and dispersions are mainly caused by the pentosans, a class of hemicellulose, present in flour. These pentosans are not introduced or taken up into the paper matrix in the pressing step, and therefore accumulate in the flour solution or flour dispersion to be introduced.

Therefore, in a first aspect, the present invention relates to a method for incorporating flour in paper or cardboard, comprising the following steps:
(i) making flour soluble or dispersible in water by degrading starch and pentosans and codifying protein, wherein the flour for the purpose of degrading pentosans is slurried in a water phase, in which water phase the pentosan-degrading enzymes and the proteases are already present before the flour is added thereto; and
(ii) introducing flour into paper or cardboard by pressing the flour solution or flour dispersion into a paper fiber matrix with a press, or by mixing the flour solution or flour dispersion into paper pulp and then preparing paper therefrom in a conventional manner.
In a preferred embodiment, the pentosans are degraded with a xylanase or a hemicellulase. Very good results are obtained when an endoxylanase is used, such as are marketed by the firm Novozymes under the trade name Shearzyme®.

By degrading the pentosans with enzymes, pentosan residues are created, which do not only solve the viscosity problem outlined, but also contribute positively to the paper properties when the flour solution or dispersion containing the pentosan residues is pressed into paper.

In the method according to the invention, the flour, for the purpose of degrading the pentosans, is slurried in a water phase, preferably a warm water phase, such as a water phase with a temperature of 20-70°C, more preferably 45-55°C, in which water phase the pentosan-degrading enzymes are already present before the flour is added thereto. This preferred embodiment has the advantage that the pentosan degradation proceeds more effectively, i.e. that the enzyme effectiveness is higher than when the enzyme is introduced into the water phase after the flour, so that the process proceeds more economically. It is assumed that, in this embodiment, the enzyme can spread more homogeneously in the flour.

Incidentally, this also holds for the other enzyme processes described in this specification.

Preferably, the pentosan-degrading enzyme is distributed homogeneously in the solvent phase, and particularly the water phase.

Therefore, according to the invention, the flour is treated such that the degradation products contribute to the paper properties. It is found that, utilizing an amount of flour according to the invention, paper or cardboard
is obtained which has substantially the same properties as paper or cardboard in which approximately the same amount of starch is used. In other words, the function of a part of the conventionally needed starch can be taken over by the protein fraction and pentosan fraction in flour. In addition to economic advantages - flour is cheaper than the starch prepared therefrom - this also offers technological, energetic and environmental advantages because no drying steps or purification steps need to be carried out and/or because no waste flows need to be discharged.

Thus, the flour is, for instance in accordance with the method as described in WO-A-97/10385, treated such that the starch molecules and the protein molecules become soluble or dispersible in water and treated such that the pentosans are degraded.

The starch present in flour can be made soluble or dispersible in a chemical and/or thermal and/or oxidative and/or enzymatic manner. Not only can this step be carried out in accordance with WO-A-97/10385 with ammonium persulfate (APS) and/or amylase, optionally in the presence of an acid, but also, for instance, by treating the flour with hydrogen peroxide or sodium hypochlorite (NaClO) and/or by heating the flour.

The protein present in flour actually comprises different types of protein. For instance, wheat, rye and barley contain much gluten, a protein that is not present in rice, corn, millet, buckwheat and oat. Non-grains such as soy beans and sunflower seeds do not contain gluten either. All these flour sources can be used according to the invention, but require a specialized processing of a chemical and/or enzymatic nature depending on the protein type present therein. Thus, deamidation reactions can be carried out and/or treatments with a protein-modifying enzyme such as proteases and preferably neutral proteases can be carried out. The treatment with proteases or heating with acid provides a partial proteolysis, whereby, for instance, gluten become more water-soluble.

In a preferred embodiment, the enzymes to be used are dispersed in a water phase, after which flour is used. After an incubation time, then a thermochemical starch conversion agent, such as APS, H₂O₂ or sodium hypochlorite, is added, after which heating takes place in, for instance, a jet heater (90-150°C, preferably 125-135°C). Instead of with the thermochemical starch conversion agent, the conversion can also be carried enzymatically with amylases, after which the heating step is carried out in the range of 60-120°C, preferably of 70-90°C. In addition to the degradation of starch, this treatment provides a processing of the protein at the same time.

For carrying out the degradations just described, flour is suspended in a suitable solvent, and particularly in water. Because flour is more difficult to disperse than starch, here preferably a powerful dispersion apparatus is used.

The second step of the method according to the invention is introducing flour, treated according to the above-described method, into paper or cardboard, by pressing the flour solution or flour dispersion into a paper fiber matrix with a press, or mixing the flour solution or flour dispersion into paper pulp and preparing paper therefrom in a conventional manner. Preferably, the flour solution or flour dispersion is introduced into the paper with a size press or a speed sizer.

The methods of introducing the flour into the paper, incidentally, are described in great detail in WO-A-97/10385.

According to the invention, during a conventional method for manufacturing paper, at least one step is carried out in which the flour solution or dispersion prepared according to the invention is introduced into the paper fiber matrix.

The flour solution or flour dispersion can be introduced into the pulp vat, but more preferably during the process step from pulp vat to paper machine or still further in the process, after the sheet formation.

Thus, during the paper sheet formation, flour solutions can be provided in the paper layer or between optionally different paper layers, for instance by spraying or foaming. Also, the flour material can be introduced into the fiber mass by means of a surface treatment or impregnation of the paper already formed, for instance and preferably by means of a size press or speed sizer treatment. Finally, the possibility is pointed out where flour material is provided on the paper web with spraying or other known application techniques.

In a preferred embodiment of the method according to the invention, flour material is introduced into the paper by means of a size press or a speed sizer treatment. During these press treatments which are generally known to a skilled person, a solution, dispersion or suspension of the treated flour is pressed into the paper by means of rolling.

For obtaining a good paper product, it is essential that the protein, starch and pentosan residual molecules are present in the paper sheet. This is because the optimization of the fiber-fiber bond of the paper, with which - probably - the advantages obtained can be explained, can only take place when a sufficient number of the above-mentioned molecules are present on, in and between the paper fibers. Thus, the paper fiber mass and the flour components form a whole; the protein and starch material provide an extra bridge function between the paper fibers.

Because each type of flour has a different composition, suitable amounts of flour are defined hereinbelow on the basis of recommended amounts of starch and protein.

The paper according to the invention preferably comprises at least 0.3 wt.%, preferably at least 1 wt.%, more preferably 2 wt.%, and typically 0.3-8 wt.% of starch and at least 0.03 wt.%, preferably between 0.05 wt.% and 2.4 wt.%, typically 0.05-1 wt.% of protein in the paper fiber matrix, based on the weight of the dry matter. If lower contents than the normal contents of protein and starch are used, the advantages according to the present invention are obtained to an unduly limited extent, or other conventional additives are required to obtain desired paper properties. If more than 8 wt.% of starch and more than 1 wt.% of protein are used, paper with a very high added value is obtained indeed, yet the process is often less attractive from a point of view of business economics.

Most preferably, 2-5 wt.% of starch and 0.2-1 wt.% of protein are introduced into the paper fiber matrix, since this combines the advantages of the invention with a good production price.

According to the present invention, the protein and starch fractions at least partly come from one and the same vegetable source. As vegetable sources which can be used for this, those can be mentioned that contain a high content of starch in addition to protein, for instance seeds, such as beans, peas and grains, for instance wheat, rye, barley, oat, millet, corn, buckwheat and rice grains; and other protein-containing and high starch-containing plant parts. These products are referred to by the term "flour" in the present specification and claims.

Preferably, flour coming from grains or legumes, preferably rye or (soft) wheat flour, is introduced into the fiber mass of the paper or cardboard. A great advantage of using flour coming from grains and legumes is that this starting material for use according to the present invention is economically more attractive than the standard starch used. For instance, at the moment, the costs of wheat flour are considerably lower than the price of native wheat starch.

By omitting the separation of flour into a starch and a protein component, further the energy consumption is reduced considerably, also because moistening and drying steps do not need to be carried out.

Flour coming from grains or legumes, and in particular rye and wheat flour, is used in amounts of preferably 2-5 wt.% based on the dry mass.

In the treatment according to the method according to the invention, the flour is made soluble or dispersible in a suitable solvent, which will usually be water. To the water, optionally, other solvents may be added, but this is not preferred.

For use on the size press and speed sizer, there is a product dissolved in water (or optionally another solvent) with a Brookfield viscosity of less than about 100 mPa·s (cP) - as a skilled person knows.

Viscosities are determined at a temperature of 50°C utilizing a Brookfield DV-1 viscometer (spindle # 1; 50 rpm).

Such a solution (suitably, the starting material is a 10 wt.% flour suspension) can be obtained by treating flour with a chemical and/or enzymatic starch chain-degrading agent until a viscosity in the above-mentioned range is reached. Thus, for instance, flour can be subjected to a degradation with ammonium persulfate (APS) known for native starch, optionally in the presence of an acid, for instance hydrochloric acid, acetic acid or citric acid. Other methods are treatments with amylases or combinations thereof with APS, optionally supplemented with a protein-modifying step.

According to the invention, the above-described degradation steps are carried out such that a product is obtained which can assume a viscosity of between 15 and 100 mPa·s (cP), and preferably between 20 and 40 mPa.s (cP), optionally after dilution.

It has further been found according to the invention that higher-quality paper is obtained and/or a method with fewer disturbances is obtained when the flour solution or flour suspension before being introduced into the paper fiber matrix is first subjected to a filtering step. Flour, and particularly flour prepared from grains, is milled, whereby the bran is milled as well, but continues to form larger particles than the other (flour) particles. Depending on the degree of milling, such flour comprises particles which may be larger than 50 and even larger than 100 µm. Particles larger than about 100 µm, and more preferably particles larger than about 50 µm are found to cause problems in the processing or in the paper and are therefore removed in a preferred embodiment, preferably utilizing filter means with a mesh width smaller than or equal to 250 µm, more preferably smaller than or equal to 200 µm, and most preferably smaller than or equal to 150 µm. In order to make the filtering process proceed effectively, the mesh openings are preferably larger than or equal to 50 µm.

The flour processing manners described in this specification generally and substantially bring the protein fraction into solution, while the starch and the pentosans are made soluble and are degraded. The processing of flour may be carried out either batchwise or continuously in line.

Finally, the invention will be illustrated on the basis of the following non-limiting examples.

### Example 1

In this example, the effect of xylanase on the slurry viscosity of flour is shown. The wheat flour is from the firm Jäckering Mühlen-und Nährmittelwerke GmbH in Hamm (Germany), type T405. The xylanase is Shearzyme 2X from the firm Novozymes. In more detail, flour is introduced into water in an amount of 30 wt.% based on the weight of the flour suspension. In the water with a temperature of 50°C, an amount of xylanase is present as indicated in the following table. The viscosity (in mPa.s (cP)) is each time determined after 0, 15 and 30 minutes of incubation.

**Table 1**

| Shearzyme 2X | t=0 min | t=15 min | t=30 min |
|---|---|---|---|
| 0 ppm | 170 | 170 | 170 |
| 500 ppm | 84 | 30 | 27 |
| 1000 ppm | 55 | 22 | 19 |

The decrease of the viscosity is explained by the effective degradation of pentosan by the enzyme.

### Example 2

In this example, the effect of the moment of the enzyme dosage is illustrated.

The moment of the dosage of the enzymes, or the order of mixing the components, remained important. In this example, this is shown with a test under the following conditions:
- Temperature of the water: 50 °C.
- Flour type: Rye flour from the firm Wesermühle in Hamelen (Germany) type RM 997.
- Concentration: 10 wt.% of flour based on the weight of the flour suspension
- Enzymes: Shearzyme 2X (1000 ppm) and a conventional protease (1000 ppm)

After incubating for 15 minutes, the viscosity (in mPa.s (cP)) and the relative amount of protein particles were determined. The relative amount of protein particles was determined microscopically (magnification 400x), while it was determined at t = 0 and t = 15 minutes how many protein particles were present in a flour suspension of a particular concentration.

**Table 2**

| Order of dosage: | Viscosity (Brookfield DV-1, spindle #1, 50 rpm | Relative amount of protein particles (%) |
|---|---|---|
| 1. Water | | |
| 2. Flour | 26 | 100% |
| 3. Enzyme | | |
| 1. Water | | |
| 2. Enzyme | 19 | 80% |
| 3. Flour | | |

These results show that the order of the dosage of flour and the enzymes is important for the enzyme effectiveness.

### Example 3

### Effect of dispersion

During a production test, rye flour from the firm Wesermühle in Hamelen (Germany) type RM 815 was pretreated on a production scale with enzymes according to the method described herein. Mixing in the above-mentioned rye flour was done with an inline disperser. The flour introduced into the water phase was microscopically examined before and after the dispersion.

**Table 3**

| | With dispersion | Without dispersion |
|---|---|---|
| Relative amount of protein particles (%) | 100 % | 25% |

The results show that dispersion significantly reduces the amount of protein particles. The amount of protein particles is a measure for the solubility of the proteins from the flour.

### Example 4

Rye flour from the firm Wesermühle in Hamelen (Germany) type RM 815 was tested for 11 days on a production scale during an endurance test. This endurance test was carried out on the paper machine PM1 at Smurfit Kappa Roermond Papier B.V., manufacturing Maasliner paper (140 g/m²). The flour was introduced into the paper with a size press. During this test, it was shown that the method according to the invention resulted in a trouble-free substitution of flour as an alternative to wheat starch. The strength and stiffness properties of the produced paper are similar to paper produced with starch.

Details can be found in the following Table:

**Table 4**

| Maasliner 140 gram/m² | Paper property with starch | Paper property with flour |
|---|---|---|
| Cobb value (g/m²) | 23 | 22 |
| Burst factor (kPa) | 221 | 219 |
| Short span Compression Test (SCT) (kN/m²) | 2.24 | 2.23 |
| Breaking length longitudinal; in m | 6220 | 6340 |

The results show that the strength and stiffness properties of the paper produced with flour are similar to paper produced with starch.

### Example 5

During an endurance test on a production scale with rye flour from the firm Wesermühle in Hamelen (Germany), type RM 815, of 11 days, it has been found that filtration of the flour suspension over a filter with a mesh width of 100 pm ensured that the viscosity of the paper remained virtually constant during the production of the paper, whereas it increased when filtering did not take place. This is shown in Table 5:

**Table 5**

| | 10-1-2008: production without filtration | 10-1-2008: production with filtration |
|---|---|---|
| Viscosity (cps) | 124 mPa.s (cps) | 28 mPa.s (cps) |

These results show that filtration is an important process step for a trouble-free production of paper with a size press application.

## Claims

1. A method for incorporating flour in paper or cardboard, comprising the following steps:
(i) making flour soluble or dispersible in water by degrading starch and pentosans and modifying protein, wherein the flour for the purpose of degrading pentosans is slurried in a water phase, in which water phase the pentosan-degrading enzymes and the proteases are already present before the flour is added thereto; and
(ii) introducing flour into paper or cardboard by pressing the flour solution or flour dispersion into a paper fiber matrix with a press, or by mixing the flour solution or flour dispersion into paper pulp and then preparing paper therefrom in a conventional manner.

2. A method according to claim 1, wherein the pentosans are treated with a xylanase or a hemicellulase, preferably with an endoxylanase.

3. A method according to claim 1 or 2, wherein the starch is degraded utilizing ammonium persulfate (APS) and/or amylase, optionally in the presence of an acid, and/or hydrogen peroxide or sodium hypochlorite (NaClO).

4. A method according to any one of the preceding claims, wherein the protein is degraded by carrying out a deamidation reaction and/or by carrying out a treatment with a protein-modifying enzyme such as protease or heating with acid, wherein a partial proteolysis occurs.

5. A method according to any one of the preceding claims, wherein the flour is slurried in a water phase with a temperature of 45-55°C.

6. A method according to any of claims 1-5, wherein a size press or a speed sizer is used to press the flour solution or dispersion into the paper fiber matrix, preferably a speed sizer.

7. A method according to any of claims 1-6, wherein the flour solution or flour dispersion before being introduced into the paper fiber matrix is first subjected to a filtering step, preferably utilizing filter means with a mesh width smaller than or equal to 250 µm.

## Patentansprüche

1. Verfahren zur Einarbeitung von Mehl in Papier oder Karton, umfassend die folgenden Schritte:
(i) Löslichmachen oder Dispergierbarmachen von Mehl in Wasser durch Abbau von Stärke und Pentosanen und Modifizieren von Protein, wobei das Mehl zum Zweck des Abbaus der Pentosane in einer Wasserphase aufgeschlämmt wird, wobei in dieser Wasserphase die Pentosanabbauenden Enzyme und die Proteasen bereits vorhanden sind, bevor das Mehl hinzugefügt wird; und
(ii) Einführen von Mehl in Papier oder Karton durch Pressen der Mehllösung oder Mehldispersion in eine Papierfasermatrix mit einer Presse oder durch Mischen der Mehllösung oder Mehldispersion in Papierbrei und dann Herstellen von Papier aus demselben in einer herkömmlichen Weise.

2. Verfahren gemäß Anspruch 1, wobei die Pentosane mit einer Xylanase oder einer Hemicellulase, vorzugsweise mit einer Endoxylanase, behandelt werden.

3. Verfahren gemäß Anspruch 1 oder 2, wobei die Stärke unter Verwendung von Ammoniumpersulfat (APS) und/oder Amylase, gegebenenfalls in Gegenwart einer Säure, und/oder Wasserstoffperoxid oder Natriumhypochlorit (NaClO) abgebaut wird.

4. Verfahren gemäß einem der vorstehenden Ansprüche, wobei das Protein dadurch abgebaut wird, dass man eine Deamidierungsreaktion durchführt und/oder dass man eine Behandlung mit einem proteinmodifizierenden Enzym, wie Protease, durchführt oder mit Säure erhitzt, wobei eine partielle Proteolyse stattfindet.

5. Verfahren gemäß einem der vorstehenden Ansprüche, wobei das Mehl in einer Wasserphase mit einer Temperatur von 45-55 °C aufgeschlämmt wird.

6. Verfahren gemäß einem der Ansprüche 1 bis 5, wobei eine Leimpresse oder ein Schnellleimer verwendet wird, um die Mehllösung oder -dispersion in die Papierfasermatrix zu pressen, vorzugsweise ein Schnellleimer.

7. Verfahren gemäß einem der Ansprüche 1 bis 6, wobei die Mehllösung oder Mehldispersion vor dem Einführen in die Papierfasermatrix zuerst einem Filterungsschritt unterzogen wird, wobei vorzugsweise Filtereinrichtungen mit einer Maschenweite von kleiner oder gleich 250 µm verwendet werden.

## Revendications

1. Procédé pour incorporer de la farine dans du papier ou du carton, comprenant les étapes suivantes :
(i) rendre de la farine soluble ou dispersible dans l'eau en dégradant l'amidon et les pentosanes et en modifiant les protéines, où la farine dans le but de dégrader les pentosanes est mise en suspension dans une phase aqueuse, phase aqueuse dans laquelle les enzymes dégradant les pentosanes et les protéases sont déjà présentes avant que la farine soit ajoutée à celle-ci ; et
(ii) introduire la farine dans du papier ou du carton par pressage de la solution de farine ou de la dispersion de farine dans une matrice de fibres de papier avec une presse, ou en mélangeant la solution de farine ou la dispersion de farine dans de la pâte à papier puis en préparant du papier à partir de celle-ci d'une manière conventionnelle.

2. Procédé selon la revendication 1, où les pentosanes sont traités avec une xylanase ou une hémicellulase, de préférence avec une endoxylanase.

3. Procédé selon la revendication 1 ou 2, où l'amidon est dégradé avec le persulfate d'ammonium (APS) et/ou une amylase, éventuellement en présence d'un acide, et/ou le peroxyde d'hydrogène ou l'hypochlorite de sodium (NaClO).

4. Procédé selon l'une quelconque des revendications précédentes, où les protéines sont dégradées par la mise en oeuvre d'une réaction de désamidation et/ou par la mise en oeuvre d'un traitement avec une enzyme modifiant les protéines comme une protéase ou chauffage avec un acide, où une protéolyse partielle survient.

5. Procédé selon l'une quelconque des revendications précédentes, où la farine est mise en suspension dans une phase aqueuse d'une température de 45-55°C.

6. Procédé selon l'une quelconque des revendications 1-5, où une presse encolleuse ou une encolleuse à grande vitesse est utilisée pour presser la solution de farine ou la dispersion de farine dans la matrice de fibres de papier, de préférence une encolleuse à grande vitesse.

7. Procédé selon l'une quelconque des revendications 1-6, où la solution de farine ou la dispersion de farine avant d'être introduite dans la matrice de fibres de papier est d'abord soumise à une étape de filtration, de préférence en utilisant des moyens filtrants ayant une largeur de maille inférieure ou égale à 250 µm.
